# EUROPEAN PATENT APPLICATION

(11) **EP 1 621 851 A2**
(43) Date of publication of application: **01.02.2006**
(21) Application number: 05016456.5
(22) Date of filing: 28.07.2005
(51) Int. Cl.: G01C 21/34

(54) **Information distribution system, method, and program**

(30) Priority: 30.07.2004 JP 2004223683; 30.07.2004 JP 2004223684; 05.08.2004 JP 2004229051
(71) Applicant: AISIN AW CO., LTD., Anjo, Aichi 444-1192 (JP)
(72) Inventor: Yoshikawa, Kazutaka c/o AISIN AW CO., LTD., Okazaki, Aichi 444-8564 (JP); Tomita, Hiroshi c/o AISIN AW CO., LTD., Okazaki, Aichi 444-8564 (JP); Minami, Toshiaki c/o AISIN AW CO., LTD., Okazaki, Aichi 444-8564 (JP); Nagase, Kenji c/o AISIN AW CO., LTD., Okazaki, Aichi 444-8564 (JP)
(74) Representative: TBK-Patent

(57) **Abstract**

Information distribution systems, methods, and/or programs register a point which meets predetermined registration conditions as a register point; select a predetermined register point as a predicted arrival display point; calculate a predicted arrival time at the predicted arrival display point; and display the predicted arrival on a map screen. Systems, methods, and/or programs obtain map data and traffic congestion information, including a plurality of congestion areas; set a priority for each congestion area; and display congestion detail information for a congestion area on the map screen based on the set priority. Systems, methods, and/or programs determine a priority for a register point; and display the register point on the map screen when the priority of the register point is greater than a predetermined value.

## Description

### INCORPORATION BY REFERENCE

The disclosure of Japanese Patent Application Nos. 2004-223683 filed on July 30, 2004, 2004-223684, filed on July 30, 2004, and 2004-229051, filed on August 5, 2004, including the specifications, drawings and abstracts are incorporated herein by reference in their entirety.

### BACKGROUND

### 1. Related Technical Fields

Related technical fields include an information distribution system and a program for information distribution method.

### 2. Description of Related Art

Conventional navigation apparatus, such as, for example, described in Japanese Unexamined Patent Application Publication No. 2002-62153, detect a current location of a vehicle, that is, a current position by a GPS (Global Positioning System). The conventional navigation apparatus also detect a direction of the vehicle, such as, a vehicle direction based on an angular velocity of the vehicle (turning angle). Map data is read out from a data storage portion, and a map screen is formed on a display portion. The vehicle position indicating the current position, a map around the vehicle position, and the vehicle direction may be displayed on the map screen. Thus, a user, for example, a driver, may travel based on the vehicle position, the map around the vehicle position, and the vehicle direction displayed on the map screen.

If the driver inputs a destination and sets search conditions, a route from the current position as a staring point to the destination is searched based on the search conditions. Then the searched route is displayed on the map screen together with the vehicle position. Thus, the driver may travel along the displayed, searched route.

In the aforementioned conventional navigation apparatus, received congestion information is displayed on a map as a figure other than the map screen. If the driver selects one of the figures by operating of a control portion, the driver may obtain the congestion detail information (a specific example of this technique may be found, for example, in Japanese Unexamined Patent Application Publication No. 2003-194568).

Display items are conventionally displayed by, for example, characters or symbols, to show various kinds of points in the map screen. If display items for points, which are close each other, are overlapped each other on the screen, low priority display items are removed from the map. Thus, only high priority display items are displayed. The display item priorities may be changed by operation of a control portion by the driver (a specific example of this technique may be found, for example, in Japanese Unexamined Patent Application Publication No. 2002-131068).

### SUMMARY

The aforementioned conventional navigation apparatus display an arriving time at a facility when the driver specifies the facility on the searched route.

However, when the driver travels to a predetermined point, for example, a frequent facility, an arriving time at the facility is not displayed unless the driver sets the facility as a destination. This is the case even if the driver knows the route to the facility well.

Once the driver sets the facility as the destination, the arriving time is searched and displayed as well as the route to the facility. However, having to set a destination and request a route to a well-known destination, along a route the driver knows well, may be bothersome for the driver. Further, sometimes the driver might want to know an arriving time at a frequent intersection during traveling. However, conventionally, the arriving time at the intersection is not displayed.

Accordingly, it is beneficial to provide an information distribution system, method, and/or program for information distribution that may easily notify an arriving time at a point.

In the conventional navigation apparatus described above, the driver needs to specify an intended figure for congestion information by operation of the control portion. It is not easy for the driver to obtain detail information while driving. In case that congestion detail information for a plurality of congestion areas are needed, the driver needs to select a plurality of figures corresponding to the congestion areas. This operation may be troublesome for the driver.

Accordingly, it is beneficial to provide an information distribution system, method, and/or a program for information distribution that may obtain congestion detail information without a driver's operation of a control portion.

In the aforementioned conventional navigation apparatus, the user needs to operate the control portion to change display item priorities. In addition, when the map screen is scaled down to display a wide-area map, some display items are not displayed. Thus, a convenience of the navigation apparatus is reduced.

Accordingly, it is beneficial to provide an information distribution system method, and/or program that may display specific display items preferentially. Convenience of the navigation apparatus may be improved by simplifying operations.

Accordingly, various exemplary implementations of the principles described herein provide an information distribution system, method, and/or program that registers a point which meets predetermined registration conditions as a register point; selects a predetermined register point as a predicted arrival display point; calculates a predicted arrival time at the predicted arrival display point; and displays the predicted arrival time on a map screen.

Various exemplary implementations of the principles described herein provide an information distribution system, method, and/or program that obtains map data and traffic congestion information, including a plurality of congestion areas; sets a priority for each congestion area; and displays congestion detail information for a congestion area on the map screen based on the set priority.

Various exemplary implementations of the principles described herein provide an information distribution system, method, and/or program that determines a priority for a register point; and displays the register point on the map screen when the priority of the register point is greater than a predetermined value.

### BRIEF DESCRIPTION OF THE DRAWINGS

Exemplary implementations will now be described with reference to the accompanying drawings, wherein:

Fig. 1 is a block diagram showing a navigation system according to an exemplary implementation of the principles described herein;

Fig. 2 shows an information distribution method according to an exemplary implementation of the principles described herein;

Fig. 3 shows a method of registering a destination according to an exemplary implementation of the principles described herein;

Fig. 4 shows a method of registering a stop-off point according to an exemplary implementation of the principles described herein;

Fig. 5 shows a method of registering an expressway/tollway facility according to an exemplary implementation of the principles described herein;

Fig. 6 shows a method of registering a main intersection according to an exemplary implementation of the principles described herein;

Fig. 7 shows a method of registering a frequent intersection according to an exemplary implementation of the principles described herein;

Fig. 8 shows registered points according to an exemplary implementation of the principles described herein;

Fig. 9 shows registered points according to an exemplary implementation of the principles described herein;

Fig. 10 shows registered points according to an exemplary implementation of the principles described herein;

Fig. 11 shows a method of predicted arrival guidance according to an exemplary implementation of the principles described herein;

Fig. 12 shows a map screen according to an exemplary implementation of the principles described herein;

Fig. 13 shows a method of displaying congestion information according to an exemplary implementation of the principles described herein;

Fig. 14 shows a map screen according to an exemplary implementation of the principles described herein;

Fig. 15 shows a map screen according to an exemplary implementation of the principles described herein;

Fig. 16 shows a map screen according to an exemplary implementation of the principles described herein;

Fig. 17 shows an example of a map screen according to an exemplary implementation of the principles described herein;

Fig. 18 shows an expressway diagram screen according to an exemplary implementation of the principles described herein;

Fig. 19 shows an expressway diagram screen according to an exemplary implementation of the principles described herein;

Fig. 20 shows a point determination method according to an exemplary implementation of the principles described herein;

Fig. 21 a destination determination method according to an exemplary implementation of the principles described herein;

Fig. 22 a stop-off facility determination method according to an exemplary implementation of the principles described herein;

Fig. 23 an interchange determination method according to an exemplary implementation of the principles described herein;

Fig. 24 a stop-off area determination method according to an exemplary implementation of the principles described herein;

Fig. 25 shows a junction determination method according to an exemplary implementation of the principles described herein;

Fig. 26 shows a priority record according to an exemplary implementation of the principles described herein;

Fig. 27 shows a display method according to an exemplary implementation of the principles described herein;

Fig. 28 shows a map screen according to an exemplary implementation of the principles described herein;

Fig. 29 shows a reference example of a map screen according to an exemplary implementation of the principles described herein;

Fig. 30 shows a map screen according to an exemplary implementation of the principles described herein;

Fig. 31 shows an expressway diagram screen according to an exemplary implementation of the principles described herein;

Fig. 32 shows an expressway diagram screen according to an exemplary implementation of the principles described herein;

Fig. 33 shows an expressway diagram screen according to an exemplary implementation of the principles described herein;

Fig. 34 shows an expressway simplified diagram screen according to an exemplary implementation of the principles described herein;

Fig. 35 shows an expressway simplified diagram screen according to an exemplary implementation of the principles described herein; and

Fig. 36 shows an expressway simplified diagram screen according to an exemplary implementation of the principles described herein.

### DETAILED DESCRIPTION OF EMBODIMENTS

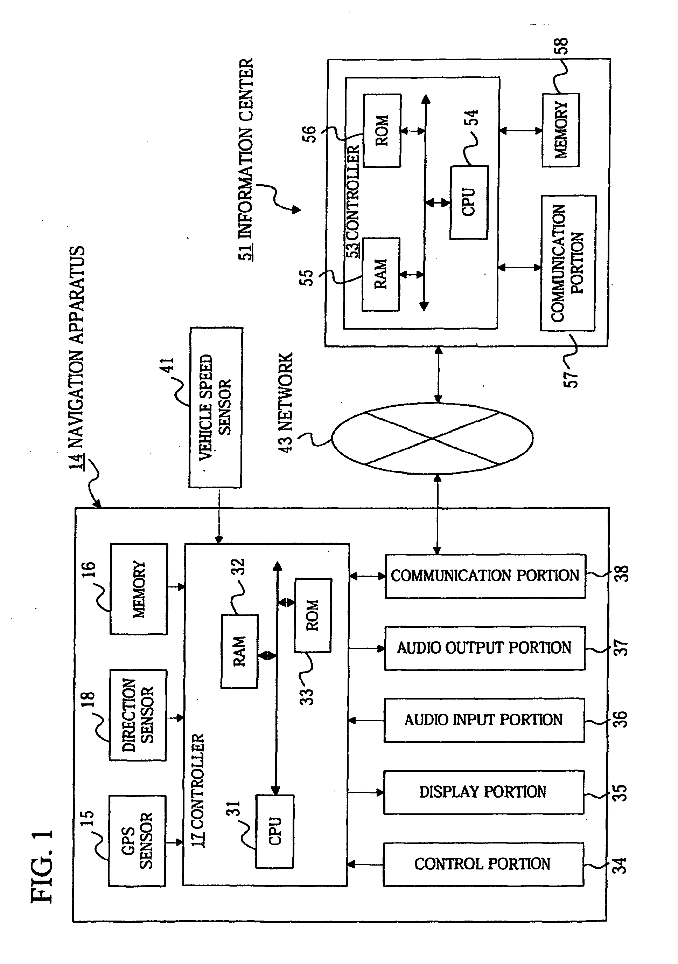

Fig. 1 is a block diagram showing an exemplary navigation system according to an exemplary implementation. Fig. 1 shows an information terminal 14, such as, for example, a navigation apparatus as an onboard device installed in a vehicle.

The navigation apparatus 14 may include a GPS sensor 15 as a current position detector, for example, for detecting a current position and a memory16, for example, for storing map data and various kinds of information. The navigation apparatus 14 may include a controller 16, for example, that may control various functions based on, for example, various kinds of programs and data, and may implement various kinds of methods and/or processes such as navigation processing based on input information. The navigation apparatus 14 may include a direction sensor 18, for example, for detecting a vehicle direction and a control portion 34, for example, for inputting data by user or driver operation. The navigation apparatus 14 may include a display portion 35, for example, for displaying various kinds of pictures on a screen (not shown) to notify the driver and an audio input portion 36, for example, for inputting data by voice. The navigation apparatus 14 may include an audio output portion 37, for example, for notifying various kinds of data by voice to the driver and a communication portion 38, for example, for transferring and/or receiving data. The controller 16 may be connected to the control portion 34, the display portion 35, the audio input portion 36, the audio output portion 37, and the communication portion 38. The controller 16 may also be connected to a vehicle speed sensor 41.

The GPS sensor 15 may detect a global current position, for example, by receiving radio waves transmitted from artificial satellites. In addition, the GPS sensor 15 may detect a current time. The GPS sensor 15 may be used as a current position detector. However, for example, a distance sensor, a steering sensor, and/or an altimeter (not shown) may be used separately or in combination with the GPS sensor as a current position detector. In addition, for example, a gyroscopic sensor or a geomagnetic field sensor may be used as the direction sensor 18.

The memory 16 may include map information, for example, composed by map data files in a database. Data used by the audio output portion 37 to output voice information may also be stored in the memory 16. The map data may include, for example, intersection data associated with respective intersection data, node data, road data associated with road links, search data processed for search use, and/or facility data.

As used herein, the term "link" refers to, for example, a road or portion of a road. For example, according to one type of road data, each road may consist of a plurality of componential units called links. Each link may be separated and defined by, for example, an intersection, an intersection having more than three roads, a curve, and/or a point at which the road type changes. As used herein the term "node" refers to a point connecting two links. A node may be, for example, an intersection, an intersection having more than three roads, a curve, and/or a point at which the road type changes

The controller 16 may include include, for example, a CPU 31, for example, that may control the navigation apparatus 14, a RAM 32, for example, used as a working memory by the CPU 31, and a ROM 33, for example, for storing various kinds of programs such as, for example, control programs, route search programs for searching for a route to a destination, and/or navigation programs for providing navigation/guidance. The controller 16 may further include a flash memory (not shown) for storing various kinds of data and programs. Note that, an MPU may be included in the controller 17 in addition to, or instead of, the CPU 31.

The memory 16 may include, for example, a disk (not shown) such as, for example, a hard disk, a CD, a DVD, and/or an optical disc to store the various kinds of data. In addition, the memory 16 may include a head (not shown), for example, as a read/write head for reading and writing various kinds of data. Note that a memory card may be included in the memory 16 as well.

The ROM 33, for example, stores various kinds of programs. The memory 16, for example, stores various kinds of data. However, for example, a hard disk (not shown) may also store programs, data, and so on. In this case, for example, the programs and data in the hard disk may be read out and be written in the flash memory, making it possible to update one or more programs and/or data by exchanging the hard disk. In addition, if an automatic transmission control apparatus (not shown) is installed in a vehicle to control an automatic transmission, the hard disk may also store programs, data, and so on for operating the automatic transmission control apparatus. Further, the programs and data in the hard disk may be received via the communication portion 38 and may be written in the flash memory.

The control portion 34 may, for example, correct a current position at the start of traveling, input a starting point and a destination, input a passing point, and/or activate the communication portion 38, for example, by driver operation. A keyboard, and/or a mouse, for example, disposed independent of the display portion 35 may be used as the control portion 34. Additionally, as the control portion 34, for example, a touch panel on a screen in the display portion 35 may be used for inputting data by touching or clicking a picture control portion such as various kinds of keys, switches, and/or buttons on the screen.

A display, for example, may be used as the display portion 35. In various kinds of screens on the display portion 35, for example, a vehicle position indicating a current position, a map, a searched route, and/or guidance information and/or traffic information along the searched route may be displayed. In addition, a distance to a next intersection on the searched route, a traffic structure at the next intersection, an operation guide and operation menu/operation key guide for, for example, the picture control portion, the control portion 34, and/or the audio input portion 36 may be displayed. Further, radio programs of FM multiplex broadcasting may be displayed in various kinds of screens in the display portion 35.

The audio input portion 36 may include, for example, a microphone (not shown) to input necessary information by voice. The audio output portion 37 may include, for example, a voice synthesizer and a speaker (not shown). For example, the searched route, the guidance information, and/or the traffic information may be output by voice synthesized by the voice synthesizer from the audio output portion 37.

The communication portion 38 may include, for example, a beacon receiver for receiving various kinds of information distributed from a road traffic information center (not shown) such as, for example, VICS® (Vehicle Information and Communication System) in the form of a radio beacon or optical beacon via a radio beacon device or a optical beacon device disposed along a road. Further, the communication portion 38 may include, for example, an FM receiver for receiving such information in the form of an FM multiplex broadcasting via an FM radio station. Then the beacon receiver may, for example, receive traffic information such as, for example, congestion information, restriction information, parking area information, traffic accident information, and rest area congestion information. The FM receiver may receive, for example, general information such as, for example, news and weather reports, as FM multiple information as well as the traffic information. The beacon receiver and the FM receiver may be unitized as a VICS® receiver. However, the beacon receiver and the FM receiver may be disposed separately.

The traffic information may include, for example, information type data indicating, for example, information type, second grid X-Y data for identifying a second grid section, link number data indicating a road link connecting two nodes and identifying an inbound lane and an outbound lane, and/or link information which is distributed corresponding to the link number data. The link information may include, for example, congestion data indicating, for example, a distance between a starting point of the road link to a beginning location of congestion, congestion degree, congestion length indicating a distance between the beginning of the congestion to the end of the congestion, and/or required time to travel each road link.

The communication portion 38 may, for example, receive various kinds of information such as traffic information and general information from the information center 51. Thus, the communication portion 38 may be connected to the information center 51 via a network 43.

A shown in Fig. 1, the navigation system may include, for example, the navigation apparatus 14, the road traffic information center, the information center 51, and the network 43. Various kinds of information may be transferred and/or received among the communication portion 38, the traffic information center, and the communication portion 57.

A communication network, for example, such as a LAN (Local Area Network), a WAN (Wide Area Network), or the Internet may be used as the network 43.

The information center 51 may include a controller 53, the communication portion 57, and a memory 58. The controller 53 may include, for example, a CPU 54, a RAM 55, or a ROM 56 for performing calculations ad controlling the information center 51 based on, for example, various kinds of programs and data. The memory 58 may store the same kind of data as the data stored in the memory 16. Further, for example, an MPU may be included in the controller 53 in addition to, or instead of, the CPU 54.

The memory 16 may store, for example, a statistical information composed of, for example, statistical data files stored in a database and/or travel history data files stored in a travel history database.

The statistical data may be, for example, historical information indicating actual, historical traffic information such as, for example, congestion information distributed in the past. Traffic information distributed by, for example, the road traffic information center and road traffic census information that is traffic volume data of a road traffic census distributed by the National Land and Transportation Ministry may be used in combination, be modified, and may be statistically processed.

Traffic information distributed by, for example, the road traffic information center, the road traffic census information, road timetable information distributed by the National Land and Transportation Ministry, and/or probe data as travel history data collected from a plurality of vehicles by the information center 51 may be used in combination, be modified, and/or may be statistically processed if needed. The statistical data may be created as the result of the statistical processing of such information.

Note that, predicted congestion information for predicting a status of congestion may be included in the history information of the statistical data. In this case, conditions may be added to create the statistical data. For example, conditions such as time, date, weather, various kinds of events, season, or facility information (with or without large shopping facilities such as department stores or supermarkets) may be added.

Travel history data may be calculated, for example, based on travel data indicating vehicle travel history for a traveling route and is accumulated.

The map database, the statistical database, and/or the travel history database may be disposed in the memory 16. However, the map database, the statistical database, and the travel history database may also be disposed in the information center 51.

Next, an exemplary operation of the above described navigation system will be described. In operation, the driver may operate the control portion 34 to activate the navigation apparatus 14. The controller 17 may initialize the navigation apparatus 14. Specifically, various kinds of data may be initialized and a current position detected by the GPS sensor 15 and a vehicle direction detected by the direction sensor 18 may be read in. The controller 17 may then determine which road link a current position is on, based on, for example, the trajectory of the obtained current position and/or shapes and dispositions of each road link composing of surrounding roads. The current position is thus identified.

The controller 17 may read out and obtain the map data from the memory 16 or may receive the map data from, for example, the information center 51 via the communication portion 38. In case of obtaining the map data from the information center 51, the controller 17 may download the received navigation data in a flash memory. The navigation data may be obtained with programs in case that the communication portion 38 acts as intermediary.

The controller 17 may create various kinds of screens and may display the screens on the display portion 35. For example, a map screen may be formed on the display portion 35 to display a road map. A vehicle position, a map around the vehicle position, and a vehicle direction may be displayed on the map screen. The road map screen may be created from the map screen and a road map may be created from the map. Thus, the driver may travel by making reference to the vehicle position, the map around the vehicle position, and the vehicle direction.

When the driver operates the control portion 34 to input a destination, the controller 17 may set the destination. If needed, a starting point may be input and set like the destination. As an alternative to the operation described above, once a point is registered in advance, the registered point may be input as a destination.

When the destination is set, the controller 17 may read, for example, search data from the memory 16 as well as the current position and the destination and may search for a route. The route from the starting point to the destination may be searched under predetermined conditions. Then, route data for the searched route may be output. Note that in this case, a route that has a small or smallest total link cost of road links may be chosen as the searched route among a plurality of routes.

The search condition may be set when the driver selects a predetermined search condition from a menu list of search conditions. As the search condition, for example, "recommended" for searching a route which has the smallest total link cost of road links preferentially, "toll" for searching a route among tollways preferentially, "general" for searching a route among general roads preferentially, "distance" for searching a route whose total distance is shorter than the other preferentially, and "another route" for searching a route based on preset conditions preferentially may be displayed in the menu list. As the example of "another route", a route that has the second smallest total link cost of road links may be searched preferentially based on such preset condition.

Subsequently, the controller 17 may give route guidance to the driver. The route data may be read in and the searched route may be displayed on the map screen based on the read route data. An audio guidance may be provided if needed. In this case, route guidance for the searched route may be given by voice from the audio output portion 37.

The information center 51 may search for a route. In this case, the controller 17 may transfer, for example, the current position and the destination to the information center 51. When the information center 51 receives the current position and the destination, the controller 53 may execute similar route search processing to the processing by the controller 17. For example, search data may be read from the memory 57, a route from the starting point to the destination based on the read current position, the destination, and the search data, and/or route data for the searched route may be output. The controller 53 may distribute the route data to the navigation apparatus 14. When the navigation apparatus 14 receives the route data from the information center 51, route guidance may be executed as described above.

The navigation apparatus 14 may receive, for example, traffic information and general information distributed in real-time from the road traffic information center and/or the information center 51 via the communication portion 38. The traffic information and the general information may be received as additional information.

The additional information may be displayed on the map screen. For example, congestion information among traffic information such as, for example, an inbound lane or an outbound lane of a road having congestion, and/or information about the congestion area may be displayed in a manner indicating such congestion (hereinafter referred to as congestion zone) as a congestion indicator. Then the congestion zone may be displayed along a road on the map screen. In this case, for example, the road and/or the congestion zone may be colored, for example, red or orange depending on the congestion degree. Instead of congestion zone, a congestion arrow may be displayed as the congestion indicator.

Accordingly, the driver may know the congestion on, for example, a planned travel route or on a searched route. A total travel time from a starting point to a destination and/or an arriving time to the destination may be calculated based on the route data, the statistical data, the travel history data, and/or the traffic information.

Among facilities such as, for example, an IC (Interchange, Exit), an SA (Service Area), a PA (Parking Area), and/or various kinds of points such as intersections, a point which meets predetermined registration conditions may be registered as a register point. An arriving time at the register point may be automatically calculated and may be displayed on the map screen as a predicted arrival time.

The controller 17 may register a point that meets the predetermined registration conditions. The registration condition may be met when the predetermined point is used.

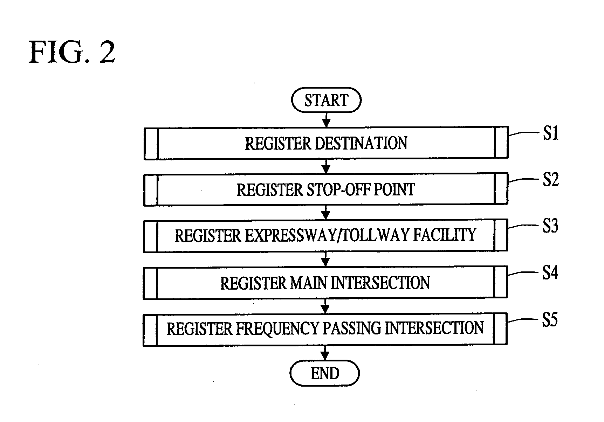

Exemplary methods of registering a point will be described below with reference to Figs. 2-10. The exemplary methods may be implemented, for example, by one or more components of the above-described navigation system. However, it should be appreciated that the exemplary methods need not be limited by any of the above-described structure.

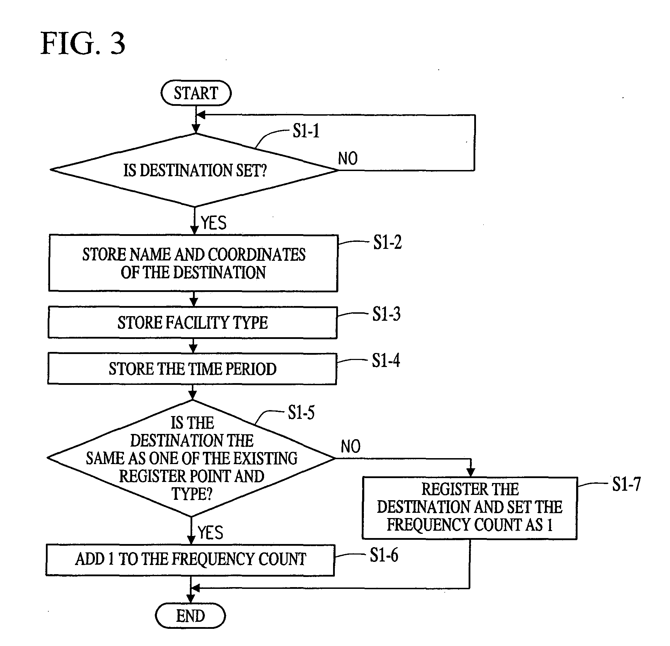

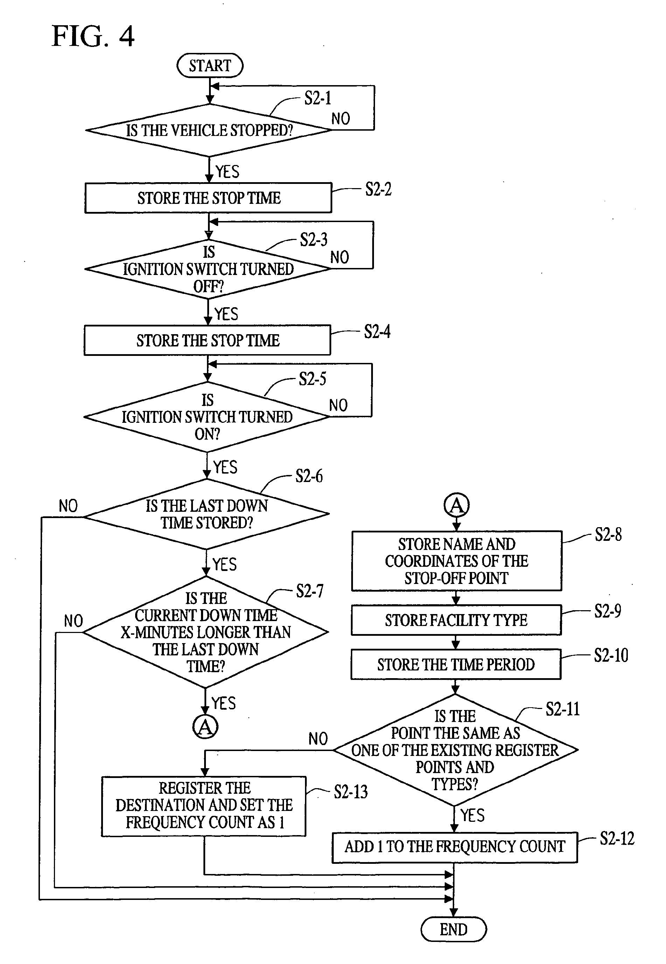

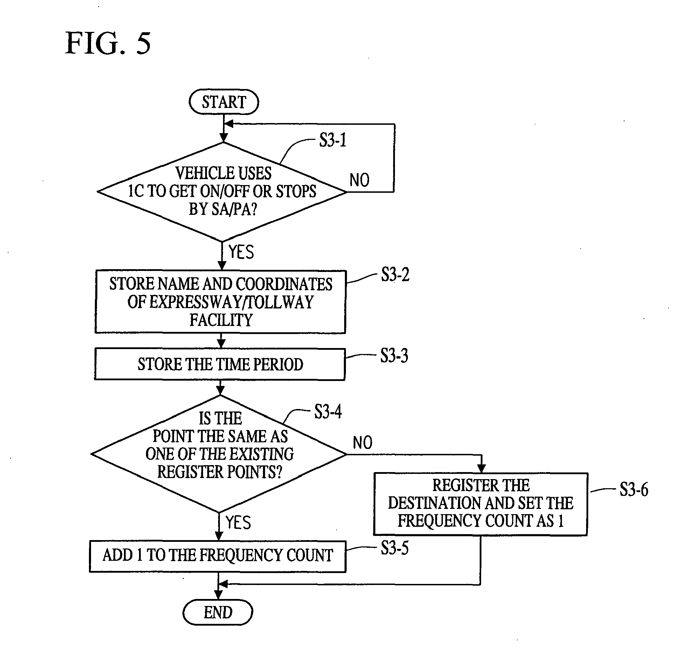

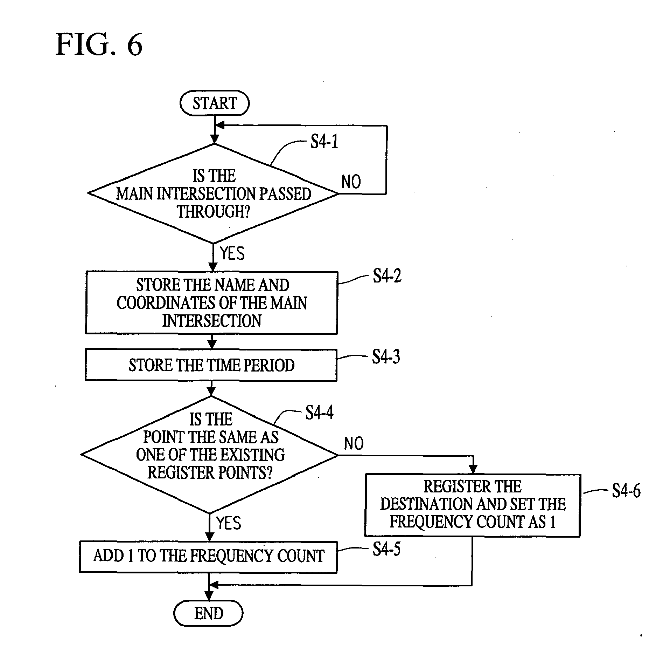

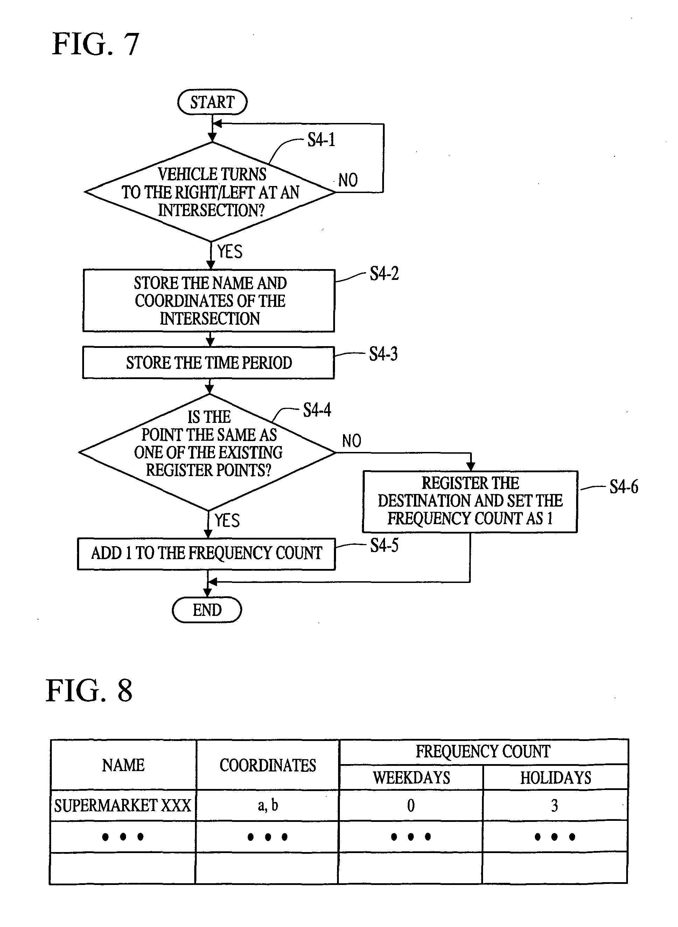

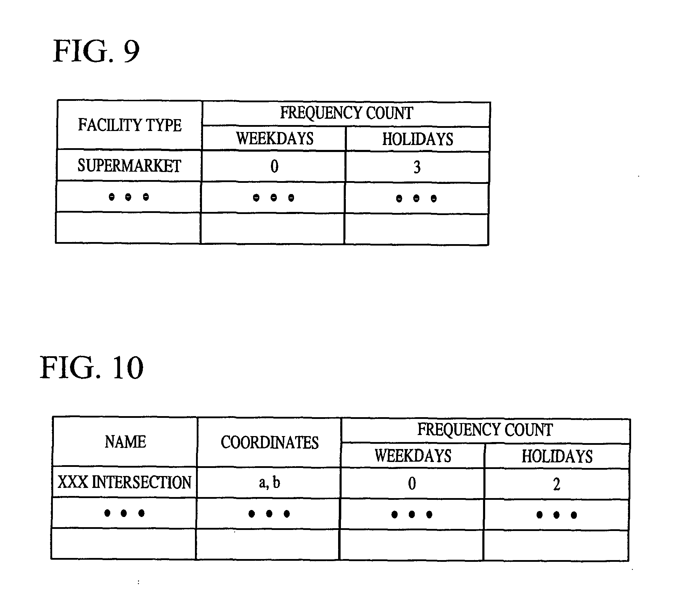

Fig. 2 shows an exemplary method of registering a point. Fig. 3 shows an exemplary method of registering a destination. Fig. 4 shows an exemplary method of registering a stop-off point. Fig. 5 shows an exemplary method of registering an expressway/tollway facility. Fig. 6 shows an exemplary method of registering a main intersection. Fig. 7 shows an exemplary method of registering a frequent intersection. Fig. 8 shows exemplary registered points. Fig. 9 shows exemplary registered points. Fig. 10 shows exemplary registered points.

As shown in Fig. 2, first a facility that has been set as a destination may be registered as a register point (Step S1), for example, according to the exemplary method of Fig. 3. Then, a vehicle stop-off point may be registered as a register point (Step S2), for example, according to the exemplary method of Fig. 4. Next, a utilized facility on an expressway/tollway may be registered as a register point (Step S3), for example, according to the exemplary method of Fig. 5. A main intersection that has been passed through in the past may be registered as a register point (Step S4), for example, according to the exemplary method of Fig. 6. An intersection that is frequently passed through may be registered as a register point (Step S5), for example, according to the exemplary method of Fig. 7. The main intersection may be, for example, an intersection of two national roads or an intersection of a national road and a prefectural road.

As shown in Fig. 2, when a predetermined point is set as a destination, when the vehicle stops by a predetermined point, when an expressway and/or tollway is used, when the vehicle passes through a main intersection, and/or when the vehicle turns to the right/left at an intersection may be set as registration conditions.

Next, an exemplary method of registering a destination will be described with reference to Fig. 3. The exemplary method may be implemented, for example, by one or more components of the above-described navigation system. However, it should be appreciated that the exemplary method need not be limited by any of the above-described structure.

As shown in Fig. 3, operation of the method waits for the destination to be set, for example, during route search (Step S1-1). Once the destination is set (Step S1-1=YES), the destination read, and, for example, the name and coordinates of the destination are stored (Step S1-2), for example, in RAM 32. Then, the facility type of the destination is stored (Step S1-3), for example, in RAM 32. Next, the time period when the destination has been set is stored (Step S1-4), for example, in RAM 32. For example, weekday or holiday (including public holiday) may be stored as the time period. However, for example, season, month, or day may be stored as a unit of the time period.

Subsequently, it is determined whether the facility and the facility type of the destination are identical to one of existing register points and facility types (Step S1-5). When the register point and the facility type of the destination are identical to one of existing register points and facility types, frequency counts for the matched facility name, the coordinates, and the facility type are increased (Step S1-6), for example, by 1. When the register point and the facility type of the destination are different from any existing register point and facility type, the facility name, the coordinates, and the facility type are registered as new entries, then the new frequency counts for the new entries start (Step S1-7), for example, from 1. Accordingly, the facility may be registered as the destination, and the registration conditions such as, for example, shown in Figs. 8 and 9 are formed.

Next, an exemplary method of registering stop-off points will be described with reference to Fig. 4. The exemplary method may be implemented, for example, by one or more components of the above-described navigation system. However, it should be appreciated that the exemplary method need not be limited by any of the above-described structure.

As shown in Fig. 4, operation of the method waits for a vehicle speed to become 0, that is, until the vehicle stops (Step S2-1). When the vehicle stops, the time when the vehicle stops is stored (Step S2-2), for example, in RAM 32. The stop-off point registration waits for an ignition switch to be turned off (Step S2-3). When the ignition switch is turned off, the time when the ignition switch is off is stored (Step S2-4).

The operation of the method waits for the ignition switch to be turned on (Step S2-5). When the ignition switch is turned on, a period of time, from the turning off to the turning on, is calculated as a down time. At the same time, it is determined whether a previous down time has been registered (Step S2-6). If the previous down time has been registered, it is determined whether the new down time is X minutes, for example, 30 minutes longer than the previous down time (Step S2-7).

If the down time is X minutes longer than the previous down time, the point where the vehicle stops is set as a stop-off point, and the name and coordinates of the stop-off point are stored (Step S2-8), for example, in RAM 32. The facility type of the stop-off point is stored (Step S2-9), for example, in RAM 32. Then a time period when the vehicle stops at the stop-off point is stored (Step S2-10), for example, in RAM 32.

Subsequently, it is determined whether the facility and the facility type of the stop-off point are identical to one of existing register points and facility types (Step S2-11). When the facility and the facility type of the stop-off point are identical to one of existing register points and facility types, the frequency counts of the matched facility name, the coordinates, and the facility type are increased (Step S2-12), for example, by 1. When the facility and facility type of the stop-off point are different from any existing register point and facility type, the facility name, the coordinates, and the facility type are registered as new entries, then the new frequency counts for the new entries start (Step S2-13), for example, from 1. Accordingly, the stop-off point is registered, and the registration conditions, for example, shown in Figs. 8 and Fig. 9 are formed.

Next, an exemplary method of expressway/tollway registration will be described below with reference to Fig. 5. The exemplary method may be implemented, for example, by one or more components of the above-described navigation system. However, it should be appreciated that the exemplary method need not be limited by any of the above-described structure.

When the vehicle is traveling on an expressway/tollway, it is determined whether the vehicle stops at an interchange and/or exit IC, a service area SA, and/or a parking area PA (Step S3-1). If the vehicle stops by an IC, an SA, and/or a PA, the stopped at facility/facilities on the expressway/tollway is/are set as an expressway/tollway facility. The name and coordinates of the expressway/tollway facility are stored (Step S3-2), for example, in the RAM 32. In addition, a time period when the vehicle stops at the expressway/tollway facility is stored (Step S3-3), for example, in the RAM 32.

Subsequently, it is determined whether the facility and the facility type of the express way/tollway facility are identical to one of existing register points and facility types (Step S3-4). When the facility and facility type of the express way/tollway facility are identical to one of existing register points and facility types, the frequency counts of the matched facility name, the coordinates, and the facility type are increased (Step S3-5), for example, by 1. When the facility and the facility type of the express way/tollway facility are different from any existing register point and facility type, the facility name, the coordinates, and the facility type are registered as new entries, then the new frequency counts for the new entries start (Step S3-6), for example, from 1. Accordingly, the expressway/tollway facility is registered, and the registration condition, for example, as shown in Fig. 8 is formed.

Next, an exemplary method of main intersection registration will be described below with reference to Fig. 6. The exemplary method may be implemented, for example, by one or more components of the above-described navigation system. However, it should be appreciated that the exemplary method need not be limited by any of the above-described structure.

In this case, a main intersection among intersections is set in advance. Then operation of the method waits for the vehicle to pass through the set main intersection (Step S4-1). When the main intersection is passed through, the name and coordinates of the main intersection are stored (Step S4-2), for example, in RAM 32. Then the passing time at the main intersection is stored (Step S4-3), for example, in RAM 32.

Subsequently, it is determined whether the main intersection is identical to one of existing register points (Step S4-4). When the main intersection is identical to one of existing register points, the frequency counts of the matched facility name and the coordinates are increased (Step S4-5), for example, by 1. When the main intersection is different from any existing register point, the facility name and the coordinates are registered as new entries, and new frequency counts for the new entries start (Step S4-6), for example, from 1. Accordingly, the main intersection, which has been passed through in the past, is registered, and the registration condition, for example, as shown in Fig. 10 is formed.

Next, an exemplary method of frequent intersection registration will be described below with reference to Fig. 7. The exemplary method may be implemented, for example, by one or more components of the above-described navigation system. However, it should be appreciated that the exemplary method need not be limited by any of the above-described structure.

Operation of the method waits for the vehicle to make a right/left at an intersection (Step S5-1). When the vehicle turns to the right/left at the intersection, the name and coordinates of the passing intersection, that is, a frequent intersection are stored (Step S5-2) in addition to a time period when the vehicle passed through the intersection (Step S5-3), for example, in RAM 32.

Subsequently, it is determined whether the intersection is identical to one of existing register points (Step S5-4). When the intersection is identical to one of existing register points, the frequency counts of the matched name and the matched coordinates are increased (Step S5-5), for example, by 1. When the intersection is different from any existing register point, the name and the coordinates are registered as new entries, then the new frequency counts for the new entries start (Step S5-6), for example, from 1. Accordingly, the frequent intersection is registered, and the registration condition, for example, shown in Fig. 10 is formed.

After the destination, the stop-off point, the facility on the expressway/tollway, the main intersection, and/or the passing intersection are registered as register points, the controller 17 may displays each predicted arriving time on the map screen.

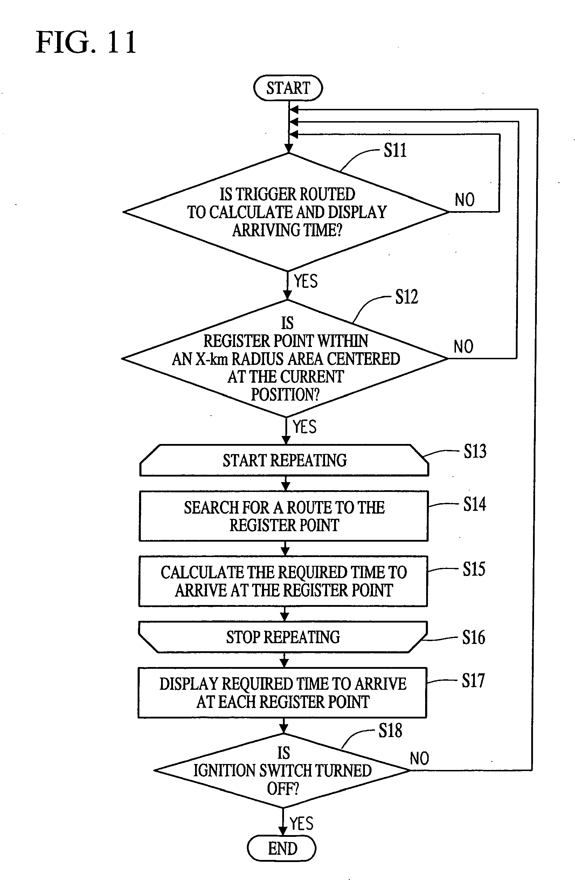

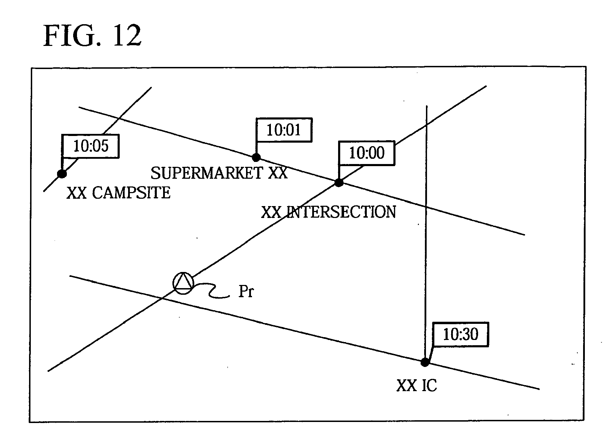

An exemplary method of displaying predicted arrival time during route guidance is described below with reference to Figs. 11 and 12. The exemplary method may be implemented, for example, by one or more components of the above-described navigation system. However, it should be appreciated that the exemplary method need not be limited by any of the above-described structure. Fig. 11 shows an exemplary predicted arrival guidance method. Fig. 12 shows an exemplary map screen.

As shown in Fig. 11, it is determined whether s display and arrival time is desired (Step S 11), for example, whether a trigger signal is distributed for calculating and displaying an arriving time. When the trigger is routed to calculate and display the arriving time, it is further determined whether the register point is within a X-km radius centering around a current position Pr (Step S12). Note that the trigger may require, for example, activation of a navigation apparatus, update of traffic information received by the communication portion 38 (Fig. 1), and/or change of predetermined-cycle update that is set in the navigation apparatus.

When the register point is within a X-km radius centering on the current position Pr, a register point whose frequency count is greater than a predetermined threshold level is selected as a predicted arrival display point. In this case, threshold levels may be compared between different types of time period. For example, a frequency count for holiday may be compared with a corresponding threshold level. A frequency count for a weekday may be compared with a corresponding threshold level.

Then a virtual route from a current position to each register point selected as a predicted arrival display point is searched (Step S 14). The virtual route is searched under same search conditions as the most popular search conditions for normal route search processing for the driver.

In addition, a required time is calculated (Step S15). The required time for the vehicle to travel along the searched virtual route is calculated as the predicted arrival. For example, a required time is calculated by adding link required times corresponding to each road link composing of each virtual route. However, for example, the required time may be calculated from a direct distance between the current position to a register point and a vehicle speed without searching for each virtual route.

Among roads to be searched as a route or a virtual route, statistical data, for example, in the statistical database may be available only for roads whose past traffic information and road traffic census information have been distributed from, for example, the road traffic information center. Further, among roads to be searched as a route or a virtual route, travel history data in the travel history database may be available only for roads tha have been traveled more than once.

Therefore, for example, among roads to be searched as a route or a virtual route, a road, for which either of statistical data or travel history data is not available, is set as a navigation standard road. A road, for which at least travel history data of statistical data and travel history data is available, is set as a travel history-available road. A road, for which at least statistical data of statistical data and travel history data is available, is set as a statistical data-available road.

According to calculation of the required time for a navigation standard road area, link required times of road links are calculated based on a fixed vehicle speed and the link lengths. According to a travel history-available road area, link required times are read out, for example, from the travel history database. According to a statistical data-available road area, congestion degrees, referring to a congestion degree table, are read out and stored in the statistical database. Then vehicle speeds corresponding to the congestion degrees, referring to a vehicle speed table (not shown), are read out and set, for example, in the ROM 33. Then link required times are calculated based on the vehicle speeds and link lengths of each road link.

The communication portion 38 constantly receives current traffic information distributed from the road traffic information center. Thus, when the vehicle travels on a road, whose current traffic information distributed from the road traffic information center is available, link required times on the basis of the current traffic information are used.

In this manner, after required times from the current point Pr to each predicted arrival display point are calculated, arriving times to each predicted arrival display point are calculated by adding the current time to each required time. For example, as shown, in Fig. 12, the names and arriving times of each predicted display point are displayed at each predicted arrival display point on the map screen as well as the current position Pr and a map surrounding the current position Pr (Step S 17). When predicted arrival display points are close to each other and the names and the arriving times of the predicted arrival display points are overlapped each other, the one which has a greater frequency count is preferentially displayed.

Then it is determined whether the ignition switch is turned off (Step S 18). When the ignition switch is turned off, operation of the method is terminated.

As described above, for example, a destination, a stop-off point, a facility on an expressway/tollway, a main intersection and/or a passing intersection may be registered as register points, a frequent point is set as a predicted arrival display point, and an arriving time to the predicted arrival display point is displayed. Thus, the driver may easily know the arriving time at the point.

Further for example, an arriving time may displayed as predicted arrival information for each predicted arrival display point. However, for example, a required time to the predicted arrival display point may be displayed as predicted arrival information.

In addition, for example, frequency counts may be set for main intersections and frequent intersections as well as for a destination, stop-off points, and/or facilities on an expressway/tollway. Then when a frequency count is greater than a threshold level, the point with the frequency count is set as s predicted arrival display point. However, it is possible to set a different threshold level for main intersections and frequent intersections from the threshold level for the destination, the stop-off points, and the facilities on an expressway/tollway. Alternatively, each one of the main intersection, the frequent intersection, the destination, the stop-off point, and the facility on an expressway/tollway may have its own threshold level. Frequency counts for each point may be involve statistical weighting.

For example, a default value of a frequency count may be 0. When a register condition is met for a point, the frequency count for the point is increased. However, the default value of the frequency count may be set as any number. When the register condition is met for a point, the frequency count of the point may be increased. When the register condition is not met for a point with a predetermined amount of time, the frequency count of the point may be decreased.

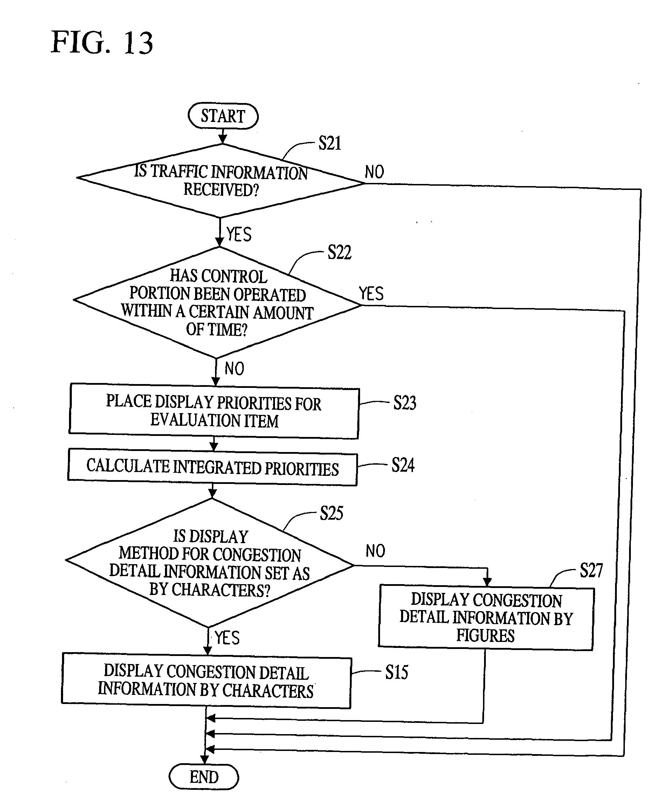

An exemplary method of displaying traffic information will be described below with reference to Figs. 13-19. The exemplary method may be implemented, for example, by one or more components of the above-described navigation system. However, it should be appreciated that the exemplary method need not be limited by any of the above-described structure.

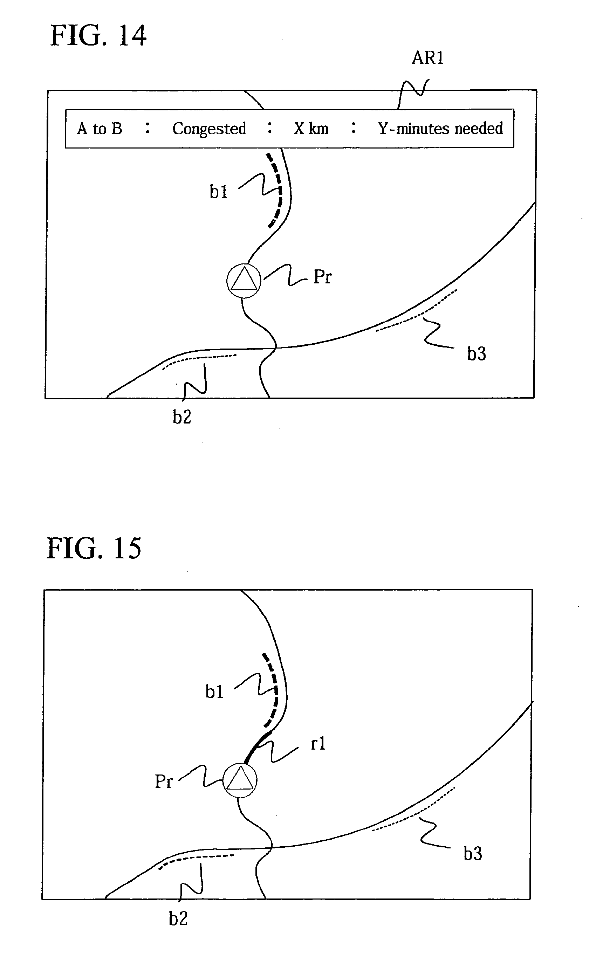

Fig. 13 shows an exemplary method for displaying congestion information. Fig. 14 shows an exemplary map screen. 15 shows an exemplary map screen.

As shown in Fig. 13, it is determined whether traffic information has been received (Step S21). When traffic information has been received, it is further determined whether the driver has operated the control portion 34 (Fig. 1) within a predetermined amount of time (Step S22). If the control portion 34 has not been operated within the predetermined amount of time, it is examined whether congestion detail information for a congestion area should be displayed on a map of a map screen based on congestion information. Then a display priority is given to each congestion area.

For example, a site of congestion, a direction of congestion, a road type, a congestion degree, a congestion length, and/or a distance to the site of congestion may be set as evaluation items of display priorities (Step S23). At least one of the evaluation items, or for example, all items, may be evaluated to set display priorities. The road type refers to a road attribute such as an expressway, a tollway, an urban expressway, a main local road, or a general road.

During route search, a high display priority may be set for a site of congestion if that congestion occurs on a searched route, if that congestion occurs around the searched route (for example, within a predetermined distance radius), and/or if that congestion occurs on a route whose total link cost is the next-to-least after the searched route, for example, in that order. For example, a low display priority may be set for a congestion direction if that congestion occurs on an opposite lane to a lane toward a destination. Meanwhile, a high display priority may be set for a congestion direction if that congestion occurs on the lane toward the destination.

For example, a low display priority may be set for a road type if that congestion occurs on a road whose road type is different from a road type of a current traveling road. Meanwhile, for example, a high display priority may be set if that congestion occurs on a road whose road type is the same as the road type of the current traveling road.

According to congestion degrees, for example, the congestion degrees may be rated on a scale of three levels, for example, "Congested," "Crowded," and "Not congested." In this case, a display priority may be set in order of "Congested," "crowded," and "not congested." Congestion degrees refer to congestion levels depending on a vehicle speed.

Furthermore, the longer the congestion length, the higher display priority may be set. For example, the display priority may be placed, for example, in order of a congestion length, for example, in order of a more than 10km-length congestion area, a 5km to 10km-length congestion area, and a 1km to 5km-length congestion area. According to a distance to a site of congestion, a shorter distance to a current position may be given a higher display priority.

Subsequently, a total priority is calculated by adding display priorities for each evaluation item of a congestion area. Then, congestion detail information for at least the highest total priority congestion area is displayed (Step S24). Furthermore, for example, congestion detail information for each congestion area may be displayed in the order of descending priorities at regular time intervals.

All evaluation items may be evaluated to place display priorities. However, for example, evaluation of two items, such as, congestion degree and congestion length, may be sufficient because the two items may be key ingredients for the driver to make a decision whether to take a detour route. For example, according to a congestion degree, the display priority 3 for "congested," 1 for "crowded," and 0 for "not congested" may be set. According to a congestion length, the display priority 3 for greater than or equal to 10km, 2 for greater than or equal to 5km and less than 10km, and 1 for greater than or equal to 1km and less than 5km may be set. Then, the total priority is calculated by adding display priorities for congestion degree and congestion length. Congestion detail information for a specific congestion area is displayed based on the total priority. In this manner, congestion detail information for a specific congestion area is displayed based on the display priority for the two items, the congestion degree and the congestion length, which according to this example, are key ingredients for the driver to make a decision whether to take a detour route. Thus, the driver may easily receive congestion detail information of a route that should not be selected.

Congestion detail information for all congestion areas may be displayed on the map of the map screen. However, for example, it is possible to display congestion detail information for less than all congestion areas, including areas not displayed in the map screen, in the order of descending priorities. Further, for example, congestion detail information for each congestion area may automatically be displayed in the order of descending total priorities at regular time intervals. However, congestion detail information to be displayed may be switched by a predetermined key operation by the user.

The user may set display method, such as, for example, whether congestion detail information is indicated by characters and/or by figures, as an initial menu in advance. It is determined whether a display method for congestion detail information is set as display by characters (Step S25). If the display method by characters is set, congestion detail information is indicated by characters based on the display priorities, for example, as shown in Fig. 14 (Step S26). If the display method by figures is not set, congestion detail information is indicated, for example, based on the display priorities as shown in Fig. 15 (Step S27).

In Fig. 14, Pr denotes a current position and bi (i=1,2,...) denotes a congestion zone. As the number of the congestion zone b1, b2, ... increases, the total priorities given to each congestion area decrease. Congestion detail information at least for the highest total priority congestion area among congestion areas indicated by the congestion zone bi's may be displayed by characters in the order of descending integrated priorities at regular time intervals. For example, congestion detail information for all congestion areas within the map screen may be displayed by characters in the order of descending total priorities at regular time intervals. A popup display area AR1 on a predetermined area of the map is created and congestion detail information may be displayed in the area AR1 on the map screen. In the congestion detail information display area AR1, display items for each congestion area may be displayed such as, for example, a site of congestion, a congestion degree, a congestion length, and a traffic condition at the site of the condition. Note that, as the display items, the evaluation items for the display priorities as described above are used.

For example, according to congestion detail information in Fig. 14, a congestion starting point and a congestion end point may be displayed to specify the site of the congestion. "Crowded" or "congested" may be displayed to indicate the congestion degree. The distance of the congestion is displayed to indicate the congestion length. The passing time at the site of the congestion is displayed to show the traffic condition at the site of the congestion. The display may indicate, for example, "A to B: Congested: X km: Y-minutes needed".

Note that according to the site of the congestion, not only the congestion starting point and the congestion end point, but an area around the congestion starting point, an area around the congestion end point, a main point of the congestion area, and/or a distance to the site of the congestion may be displayed. According to the congestion degree, not only "crowded" or "congested" but, for example, 5 numbers indicating congestion degrees in five levels or, for example, 5 figures indicating congestion degrees in five levels may be displayed.

According to the traffic condition at the site of the congestion, not only the passing time at the site of the congestion but a vehicle speed at the site of the congestion may be displayed. The passing time and the passing vehicle speed may be calculated based on link required times.

A congestion area indicated by the congestion zone b1, for which congestion detail information is displayed in the congestion detail information display area AR1, is displayed with a thick line. Other congestion areas may be displayed by thinner lines because such congestion areas are less highlighted based on the total priorities. For example, the congestion zone b2 and b3 are less thick, in that order. When congestion detail information for a congestion area that is indicated by the congestion zone b2 in the congestion detail information display area AR1 is displayed, the congestion zone b2 is highlighted with thick line. The congestion zone b1, b3, ... are less thick in that order.

In Fig. 15, Pr denotes a current position and bi denotes a congestion zone. As the number of the congestion zone b1, b2, ... increases, the total priorities given to the congestion areas decreases. Congestion detail information for at least the highest total priority congestion area among the congestion areas may be displayed by figures in the order of descending total priorities at regular time intervals. For example, congestion detail information for all congestion areas within the map screen may be displayed by figures in the order of descending integrated priorities at regular time intervals. Specifically, according to the congestion detail information, each road ri (i=1, 2, ...) from the current point Pr to each end point of the congestion zones b 1 through b3 may be highlighted with thick line. For the highlighting display, a different color from others or darker color may be used for the road ri.

Note that, each congestion zone bi may be highlighted in addition to each road ri. In this case, the congestion zone bi may be highlighted with thicker line. For the highlighting display, the congestion zone bi may blink, be different-colored, be darker-colored, or be animated. Further instead of the congestion zone bi, figures of vehicles may be arranged to show the congestion.

Congestion areas other than the highlighted congestion areas may be indicated by thinner lines. For the non-highlighting display, such congestion zone bi may be lighter-colored. In the present embodiment, congestion areas indicated by the congestion zone b2, b3, ... are less highlighted. For example, the congestion zone b2 and b3 are displayed with thinner line in that order.

As described above, congestion detail information may be automatically displayed for specific congestion areas (at least for the highest total priority congestion area). Thus, the driver may receive congestion detail information without operation of the control portion 34.

Note that, the driver may operate the control portion 34 if he/she needs specific congestion detail information to be displayed on a map screen.

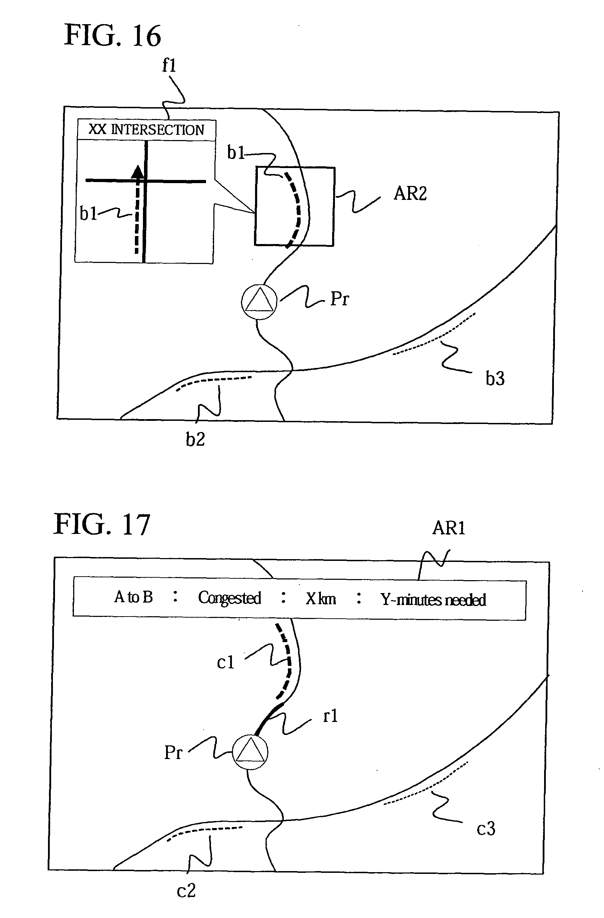

Fig. 16 shows another exemplary map screen. As discussed above, it is determined whether display by characters is set as the display setting for congestion detail information. If the display method by characters is set, congestion detail information is indicated by characters based on the display priorities as shown in Fig. 14. If the display method by figures is set, congestion detail information may be indicated by figures based on the display priorities as shown in Fig. 16.

As shown in Fig. 16, congestion detail information for at least the highest total priority congestion area among the congestion areas may be displayed in the order of descending total priorities at regular time intervals. For example, congestion detail information for congestion areas indicated by the congestion zone b1 to b3 within the map screen are displayed by figures in the order of descending total priorities at regular time intervals. The congestion zones b1 through b3 (the area AR2 including the congestion zone b 1 in Fig. 16) may be surrounded with frame borders. In the area AR2, a congestion area enlarged view f1 is indicated by a dialogue balloon or a pop-up window that is indicated by an arrow. Further an arrow indicating a site of the congestion or a main point of the congestion may be displayed. The display may indicate, for example, "XX intersection." If needed, the site of the congestion, the congestion degree, the congestion length, and the traffic condition at the site of the condition may be displayed as well.

When congestions are predicted from, for example, statistical data, travel history data, and/or traffic information, it is possible to change the background color of the congestion area enlarged view f1. The frame borders may be a predetermined color, for example, red, or may be dotted lines. In addition, the map in the area AR2 may be highly-colored in addition to surrounding with frame borders.

A congestion area indicated by the congestion zone b1, for which congestion detail information is displayed in the congestion area enlarged view f1, is highlighted with thick line. Other congestion areas are displayed by thinner lines because such congestion areas are less highlighted based on the total priorities. For example, the congestion zone b2 and b3 are less highlighted in that order. When congestion detail information for a congestion area that is indicated by the congestion zone b2 in the congestion area enlarged view f1, is displayed, the congestion zone b2 is highlighted with thick line. The congestion zone b1, b3, ... are less highlighted in that order.

Fig. 17 shows another exemplary map screen. As discussed above, a display method for congestion detail information is selected. Congestion detail information may be displayed by both of characters and figures based on the display priorities as shown in Fig. 17.

As shown in Fig. 17, a popup congestion detail information display area AR1 may be created and congestion detail information may be displayed in a predetermined area of the area AR1 above the map on the map screen. Congestion detail information for at least the highest total priority congestion area among the congestion areas indicated by the congestion zone ci (i=1, 2, ...) may be displayed by characters in the order of descending total priorities at regular time intervals. For example, congestion detail information for congestion areas within the map may be displayed by figures in the order of descending total priorities at regular time intervals. In this case, display items may be displayed such as, for example, a site of congestion, a congestion degree, a congestion length, and a traffic condition at the site of the condition. The display item may indicate, for example, "A to B: Congested: X-km: Y-minutes needed". As the number of the congestion zone c1, c2, ... increases, the total priorities given to the congestion areas decreases.

A congestion area indicated by the congestion zone c1, for which congestion detail information is displayed in the congestion detail information display area AR1, may be highlighted with thick line. Other congestion areas may be displayed by thinner lines because such congestion areas are less highlighted based on the total priorities. For example, the congestion zone c2 and c3 are less highlighted in that order. When congestion detail information for a congestion area, which is indicated by the congestion zone c2 in the congestion detail information display area AR1, is displayed, the congestion zone c2 may be highlighted with thick line. The congestion zone c1, c3, ... are less highlighted in that order.

Specifically, for example, according to the congestion detail information, the road ri from the current point Pr to the end point of the congestion zone ci, for which congestion detail information is displayed in the congestion detail information display area AR1, is highlighted with thick line. For the highlighting display, a different color from others or darker color may be used for the road ri.

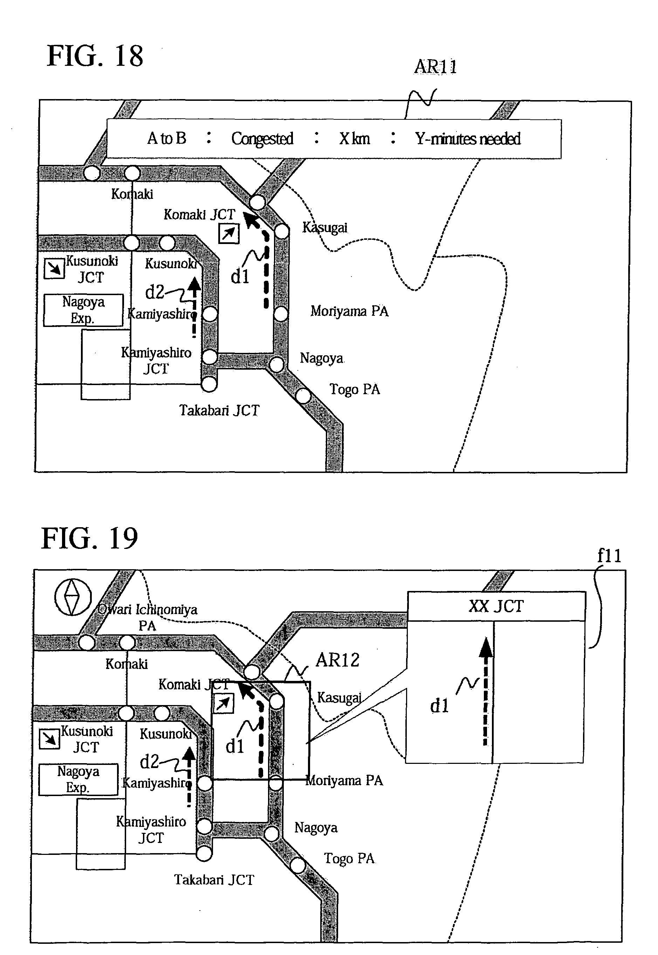

Fig. 18 shows an exemplary map screen. Fig. 19 shows another exemplary map screen. An expressway diagram screen may be created, for example, in the display portion 35 based on a predetermined user operation of the control portion 34. Then, for example, an expressway diagram is displayed on the expressway diagram screen as a road map. In the expressway diagram, expressways and/or tollways within a predetermined area centering on the current position is/are displayed. Thus, the driver may travel with looking at the diagram including, for example, a main Service Area, a Parking Area, a junction, and an Interchange/Exit on the expressway and/or the tollway.

Note that, the expressway diagram may be displayed on various kinds of scales on the expressway diagram screen. When a searched route includes an expressway/tollway, the expressway/tollway within a predetermined area may be displayed, for example, centering on the nearest Interchange from the current position.

Upon receiving traffic information, and when the control portion 34 has not been operated within a predetermined amount of time, a display priority may be given to each display item indicating congestion detail information of congestion areas. For example, a site of a congestion, a direction of the congestion, a road type, a congestion degree, a congestion length and a distance to the site of congestion may be set as display items. Then, display priorities may be given to the display items.

As discussed above, it may be determined whether display by characters is set as the display setting for congestion detail information. If the display method by characters is set, congestion detail information is indicated by characters based on the display priorities, for example, as shown in Fig. 18. If the display method by figures is set, congestion detail information is indicated by figures based on the display priorities, for example, as shown in Fig. 19.

Specifically, dj (j=1, 2, ...) in Fig. 18 indicates congestion zones. Congestion detail information for at least the highest total priority congestion area among the congestion areas indicated by the congestion zone dj may be displayed by characters in the order of descending integrated priorities at regular time intervals. For example, congestion detail information for all congestion areas within the expressway diagram screen is displayed by figures in the order of descending integrated priorities at regular time intervals. A popup display area AR1 is created on a predetermined area of the expressway diagram and congestion detail information is displayed in the area AR1 on the expressway diagram screen. In the congestion detail information display area AR1, display items for each congestion area may be displayed such as, for example, a site of congestion, congestion degree, congestion length, and traffic condition at the site of the condition. The display item may indicate, for example, "A to B: Congested: X-km: Y-minutes needed."

In Fig. 19, congestion detail information at least for the highest total priority congestion area among the congestion areas may be displayed by figures in the order of descending total priorities at regular time intervals. For example, congestion detail information for all congestion areas within the expressway diagram screen is displayed by figures, that is, in the congestion area enlarged view, in the order of descending integrated priorities at regular time intervals. In Fig. 19, the area AR12 including the congestion zone d1 is surrounded with frame borders. In the area AR12, the congestion area enlarged view f11 is indicated by a dialogue balloon or a pop-up window that is indicated by an arrow. Further an arrow indicating a site of the congestion or a main point of the congestion may be displayed. The display looks like, for example, "XX JCT."

Congestion areas other than highlighted congestion areas are indicated by thinner lines. For example, congestion areas, whose congestion detail information are not displayed in either of the congestion detail information display area AR11 or the congestion area enlarged view f11, indicated by the congestion zone d2 are non-highlighted. For example, the congestion zone d2 is indicated by thinner line.

In the above example, a display setting may be executed at an initial menu. However, a switch key may be disposed on the map screen or the expressway diagram screen so that it is possible to switch the display method of congestion detail information between by characters and by figures by pushing the switch key.

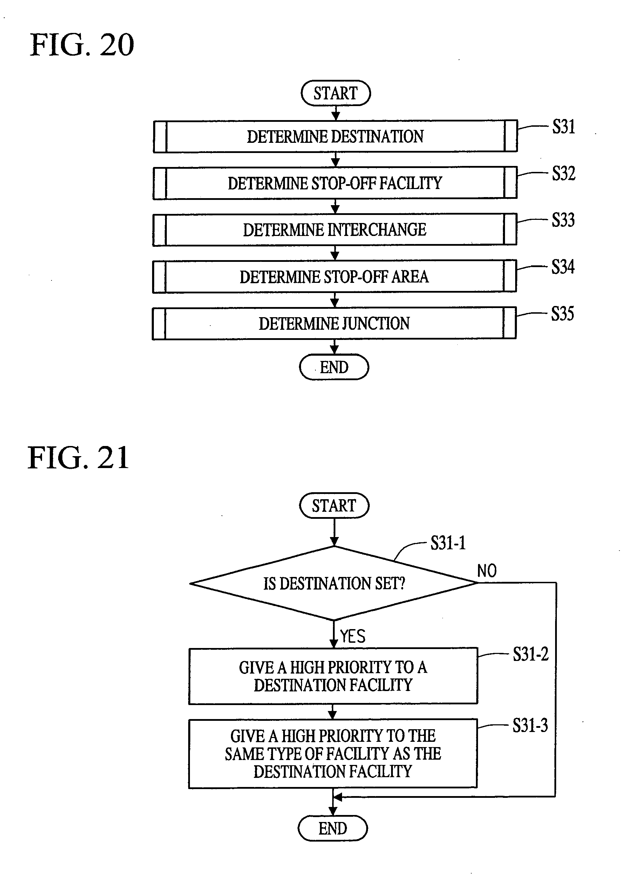

An exemplary method of setting display item priorities will be described below with reference to Figs. 20-36. The exemplary method may be implemented, for example, by one or more components of the above-described navigation system. However, it should be appreciated that the exemplary method need not be limited by any of the above-described structure.

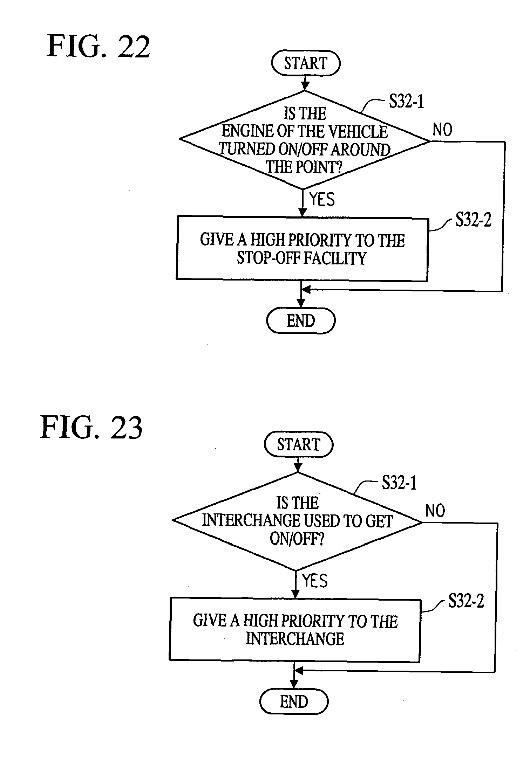

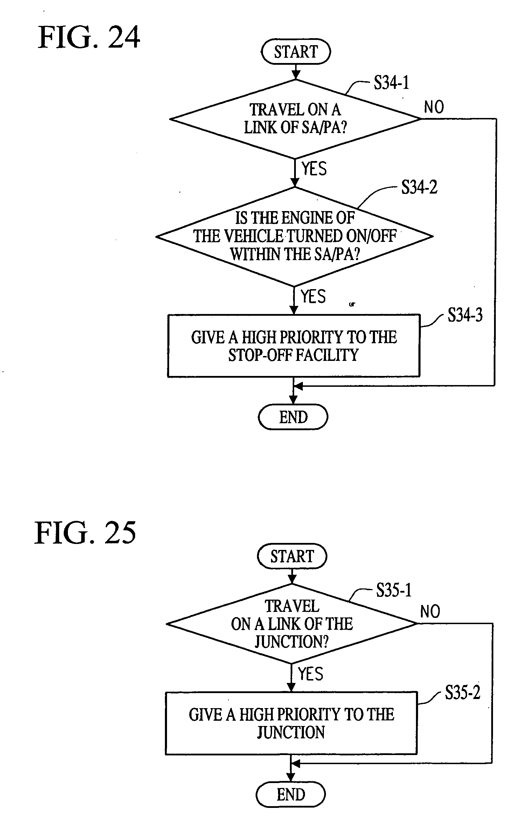

Fig. 20 shows an exemplary method of point determination. As shown in Fig. 20, a high priority is given to a point set as a destination (Step S31), for example, according to the exemplary method of Fig. 21. A high priority is given to a point, where a vehicle stops by, as a stop-off facility (Step S32), for example, according to the exemplary method shown in Fig. 22. A high priority is given to an Interchange or an Exit at where the vehicle gets on or off an expressway/tollway (Step S33), for example, according to the exemplary method shown in Fig. 23. A high priority is given to a stop-off area on the expressway/tollway where the vehicle stops (Step S34), for example, according to the exemplary method shown in Fig.24. A high priority is given to a junction on the expressway/tollway where the vehicle passes through (Step S35), for example, according to the exemplary method shown in Fig. 25.

It may also be determined whether an expressway/tollway facility such as, for example, an Interchange, a stop-off area, or a junction, is used.

As point determination conditions, it is determined whether a point is set as a destination, whether the vehicle stops by a facility, whether the vehicle gets on or off an expressway at an Interchange or an Exit, whether the vehicle stops by a stop-off area, and/or whether the vehicle passes through a junction. When at least one of the conditions is/are met, that means the point determination conditions are met. Meanwhile, in case that the destination is not set, that the vehicle does not stop by any stop-off facility, that the vehicle does not use any Interchange/Exit, that the vehicle does not stop by any stop-off area, and/or that the vehicle does not pass through any junction, the point determination conditions are not met.

Fig. 21 shows an exemplary method of destination determination. The exemplary method may be implemented, for example, by one or more components of the above-described navigation system. However, it should be appreciated that the exemplary method need not be limited by any of the above-described structure.

AS shown in Fig. 21, it is determined whether a destination is set (Step S31-1). When the destination is set, it is determined that point determination conditions are met. Therefore, the destination is read and a high priority is given to the facility of the destination (Step S31-2). In addition, high priorities are placed for facilities whose facility type is the same as the type of the destination (Step S31-3).

Fig. 22 shows an exemplary method of stop-off facility determination. The exemplary method may be implemented, for example, by one or more components of the above-described navigation system. However, it should be appreciated that the exemplary method need not be limited by any of the above-described structure..

As shown in Fig. 22, it is determined whether a point is one of stop-off facilities and whether the vehicle turns on/off the engine around the point (Step S32-1). When it is determined that the point is one of stop-off facilities and the engine of the vehicle is turned on or off, it is further determined that the point determination conditions are met. Therefore, a high priority is given to the stop-off facility (Step S32-2).

Fig. 23 shows an exemplary method of interchange determination. The exemplary method may be implemented, for example, by one or more components of the above-described navigation system. However, it should be appreciated that the exemplary method need not be limited by any of the above-described structure.

As shown in Fig. 23, it is determined whether the vehicle uses a predetermined Interchange/Exit to get on/off on an expressway/tollway (Step S33-1). When the vehicle gets on or off at the Interchange/Exit, it is determined that the point determination condition is met. Therefore, a high priority is given to the Interchange/Exit (Step S33-2).

Fig. 24 shows an exemplary method of stop-off area determination. The exemplary method may be implemented, for example, by one or more components of the above-described navigation system. However, it should be appreciated that the exemplary method need not be limited by any of the above-described structure.

As shown in Fig. 24, it is determined whether a predetermined Service Area/Parking Area (SA/PA) is a stop-off area and whether the vehicle travels on a link of the Service Area or the Parking Area (Step S34-1). When the vehicle travels on such link, it is determined whether the engine of the vehicle is turned on/off at the Service Area/Parking Area (Step S34-2). When the engine is turned on/off at the Service Area/Parking Area, it is determined that the Service Area/Parking Area is a stop-off area, that is, the point determination condition is met. Therefore, a high priority is given to the Service area/Parking Area (Step S34-3).

Fig. 25 shows an exemplary method of junction determination. The exemplary method may be implemented, for example, by one or more components of the above-described navigation system. However, it should be appreciated that the exemplary method need not be limited by any of the above-described structure.

As shown in Fig. 25, it is determined whether the vehicle passes through a junction and whether the vehicle travels on a link of the junction (Step S35-1). It is determined that the point determination conditions are met when the vehicle travels on the link and passes through the junction. Therefore, a high priority is given to the junction (Step S35-2).

As described above, a high priority may be given to a point such as, a destination, a stop-off facility, an Interchange, a stop-off area, and a junction when the point determination condition for the point is met. For example, a default priority is set for each point. When the point is used frequently, a high priority is given to the point. However, for example, when a point is less frequently used, a low priority may be given to the point.

Furthermore, a priority for one time period may be stored according to one point, so that it is possible to change a priority to another for the point regularly based on the time periods. As the time period, for example, a season or a month may be set.

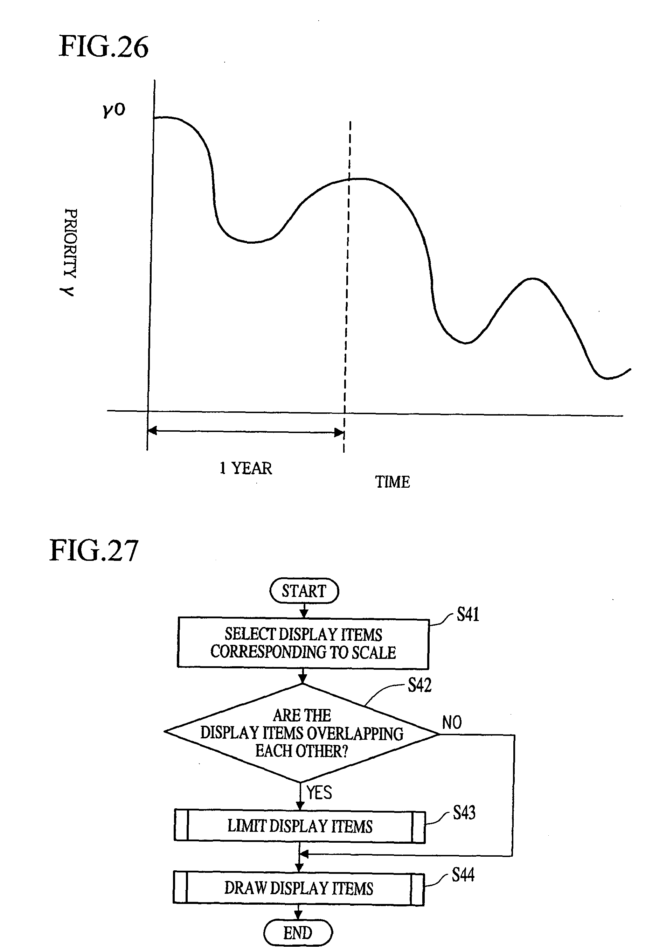

Fig. 26 shows an exemplary priority record. As shown in Fig. 26, for example, 0 is set as a default priority. When a point is less frequently used, the priority for the point decreases. However, after one year, the priority may be raised corresponding to a predetermined value.

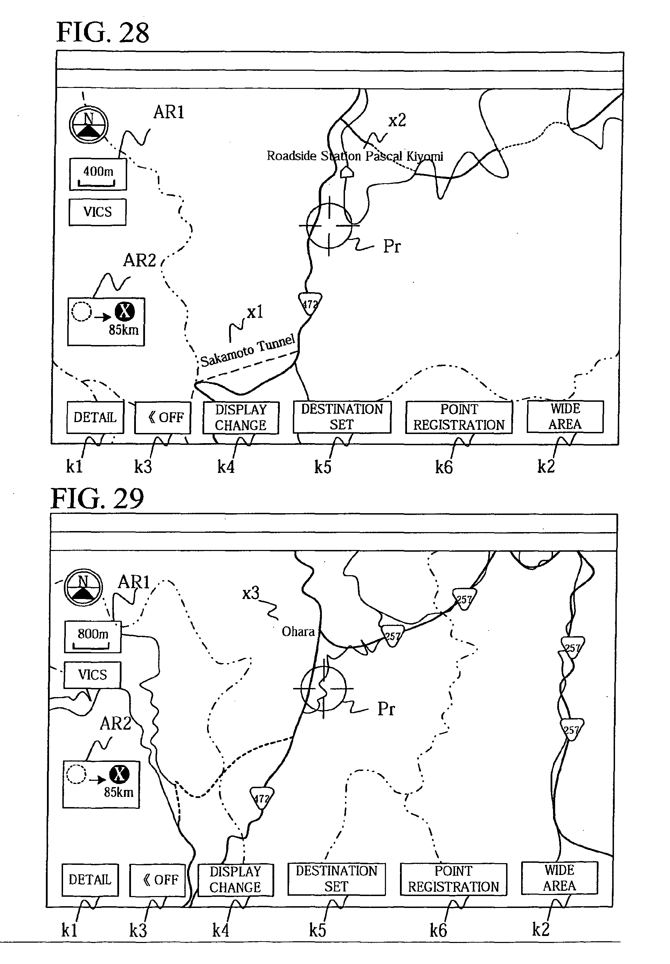

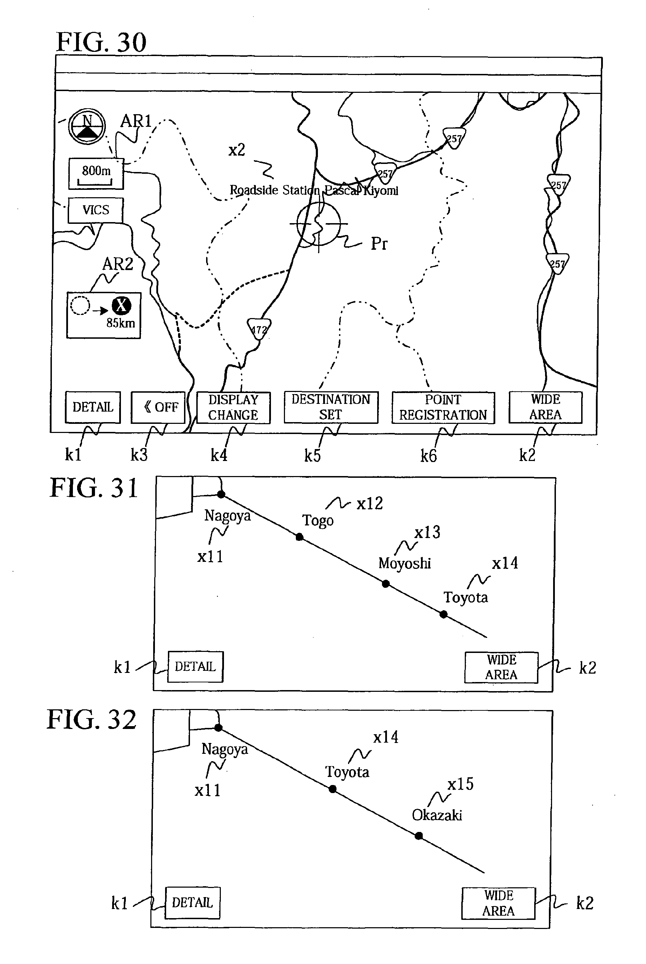

Fig. 27 shows an exemplary display method. Fig. 28 shows an exemplary map screen. Fig. 29 shows an exemplary map screen. Fig. 30 shows an exemplary map screen. The exemplary method may be implemented, for example, by one or more components of the above-described navigation system. However, it should be appreciated that the exemplary method need not be limited by any of the above-described structure.

As shown in Fig. 27, a map scale to create a map on a map screen is set and display items to be displayed are determined corresponding to the scaled map (Step S41). Then a display scale is set as a display reference value for each point based on priorities. Specifically, a priority of a point is read and the priority is compared with threshold levels of preset priorities for each map scale. When the read priority is greater than one of the threshold levels, a scale corresponding to the threshold level is set as a display scale. That is, the scale is set as the display reference value. The display scale is for displaying the widest-area map capable of displaying display items. That is, the display items are not displayed in a wide-area map on a smaller scale than the display scale, and the display items are display in a narrow-area map on a bigger scale than the display scale.

However, when the smaller-scale/wider-area map is used, the possibility for overlapping display items each other may be increased. Thus, for example, a threshold level is set for each scale. For the smaller scale, the higher threshold level is set.

Subsequently, it is determined whether a display scale set for each point is at least a scale of a map displayed on the map screen. When the display scale is at least the map scale, display items of a point corresponding to the display scale may be determined.

The map data may include characters and symbols indicating point names such as facility names and intersection names, characters indicating area names such as city, town, or village names, and/or characters indicating road names such as expressways and/or tollways. However, the map data may further include a display scale for each display item. Then a display scale stored for each point is read out. It is determined whether the display scale is equal to or greater than a scale of a map displayed on the map screen. When the display scale at least the scale of the map, display items for a point corresponding to the display scale are determined.

It is then determined whether display items overlap each other (Step S42). When the display items are overlapped, the number of display items to be displayed is limited (Step S43). Display scales of overlapped display items are compared with each other. As the result of the comparison, the display is limited to a display item that has the smallest display reference value (a display item which may be displayed even in the widest-area map on the smallest scale). The determined display items are then drawn and displayed on the map screen (Step S44).

For example, as shown in Fig. 28 through 30, an area AR1 and an area AR2 are formed on the map screen. A direction and a scale of the map are displayed in the area AR1. In the area AR2, a distance to a destination and various kinds of keys are displayed. For example, key k1 for displaying a narrow-area map, key k2 for displaying a wide-area map, key k3 for stopping displaying a certain key, key k4 for changing display method, key k5 for setting a destination, and key k6 for registering a point may be displayed. Further in the area AR2, a current position Pr and display items x1 through x3 are displayed. The operation may depend on the key k1 through k6.

In Fig. 28, display item x2 "Roadside Station Pascal Kiyomi" is displayed in the map on the map scale on the map screen. However, in conventional navigation apparatus, when the map scale gets smaller, "Roadside Station Pascal Kiyomi" is removed from the map and the display item x3 "Ohara" is displayed instead as shown in Fig. 29. However, according to this example, when a high priority is given to a display item x2, "Roadside Station Pascal Kiyomi" may be displayed even on the map on a smaller scale as shown in Fig. 30. The display item x2 is overlapped by the display item x3. However, the display priority of the display item x2 is higher than the display priority of the display item x3. Thus, the display item x3 is removed.

As described above, a display priority of a display item for each point may be automatically changed. Thus, operations may be simplified. The user needs no complex operation of the control portion 34. For example, when a wide-area map is displayed on the map screen by using a small scale, frequent display items are preferentially displayed. Thus, convenience of the navigation apparatus 14 may be improved.

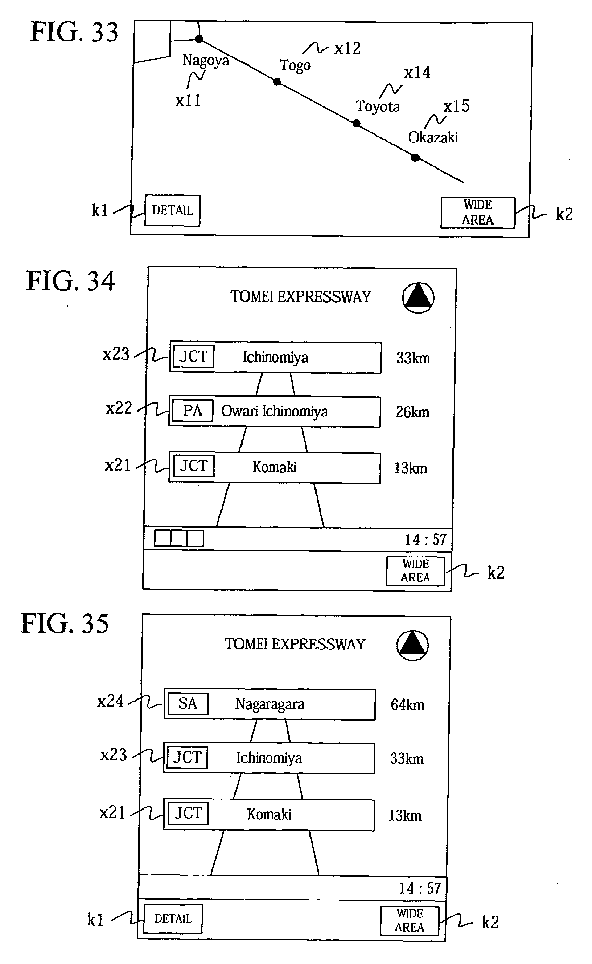

Fig. 31 shows an exemplary expressway diagram screen. Fig. 32 shows an exemplary expressway diagram screen.. Fig. 33 shows an exemplary expressway diagram screen.

In Figs. 31 through 33, the key k1 is for displaying an expressway diagram as a display screen. The key k2 is for displaying a wide-area expressway diagram. In Fig. 31, "Nagoya," "Togo," "Miyoshi," and "Toyota" are displayed on the expressway diagram on the scale on the expressway diagram screen because they are display items x11 to x14. In a conventional navigation apparatus, as in Fig. 32, when the scale of the expressway diagram gets smaller, "Togo" and "Miyoshi," which are display items x12 and x13, are removed from the expressway diagram. "Okazaki" as display item x15 is displayed instead. Alternatively, according to the above example, when a high priority is given to the display item x12, "Togo" may be displayed even on the map on a smaller scale as shown in Fig. 33.

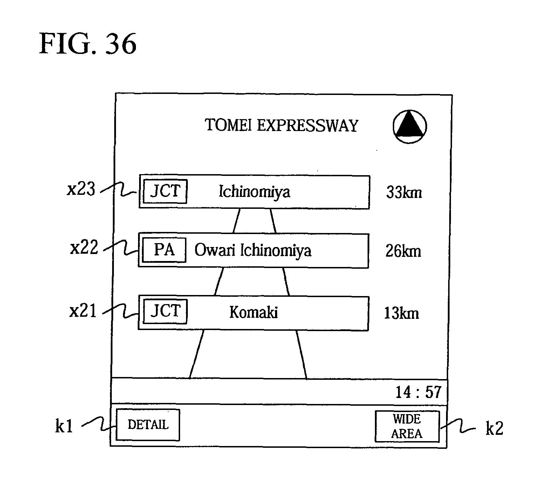

Fig. 34 shows an exemplary expressway simplified diagram screen. Fig. 35 shows an exemplary expressway simplified diagram screen. Fig. 36 shows an exemplary expressway simplified diagram screen.

In Figs. 34 through 36, the key k1 is for displaying an expressway simplified diagram as a display screen. The key k2 is for displaying a wide-area expressway simplified diagram. An expressway simplified diagram screen is formed, for example, on the display portion 35 when the vehicle gets on an expressway. A predetermined number of points may be selected among points on the expressway, for example, an Interchange, a Service Area, a Parking Area, and/or a junction. For example, three of them are selected and displayed the names and symbols of the points in the expressway simplified diagram screen as display items.

Each wide degree corresponding to a map scale may be set for each map in the expressway simplified diagram screen. Thus, a plurality of different scale expressway simplified diagrams may be displayed. The smaller the wide degree becomes, the smaller the number of points that are selected as display points whose display items are displayed. The bigger the wide degree becomes, the more number of points are selected as the display points whose display items are displayed.

During display (e.g., according to Fig. 27), a wide degree of an expressway simplified diagram to be displayed on the expressway simplified diagram screen is read, and display items to be displayed on the expressway simplified diagram corresponding to the wide degree are determined. A display wide degree is set for each point based on priorities. Specifically, a priority of a point is read in and the priority is compared with threshold levels of preset priorities for each wide degree of the expressway simplified diagram. When the read priority is greater than one of the threshold levels, a wide degree corresponding to the threshold level is set as a display wide degree.

The display wide degree is for displaying the widest-area expressway simplified diagram of diagrams capable of displaying display items. That is, the display items are not displayed in an expressway simplified diagram with a smaller wide degree than the display wide degree, and the display items are displayed in an expressway simplified diagram with a bigger wide degree than the display wide degree.

Subsequently, it is determined whether a display wide degree set for each point is equal to or greater than a scale of the expressway simplified diagram displayed on the expressway simplified diagram screen. When the display wide degree is equal to or greater than the diagram scale, display items of a point corresponding to the display wide degree are abstracted.

A display wide degree is set for each point on an express simplified diagram as display reference value. Then, the display wide degree for each point is stored in the map data. For example, different display wide degrees may be set for Interchanges/Exits, Service Areas and Parking Areas, and junctions. Specifically, for example, a display wide degree for an Interchange/Exit may be set based on the number of vehicles getting on/off. A display wide degree for a Service Area and Parking Area may be set based on the number of vehicles using the Service Area and Parking Area. A display wide degree for a junction may be set based on the number of vehicles passing through the junction. The larger the number of vehicles that get on/off, use, and/or pass, the smaller display wide degree becomes. Meanwhile, the lesser the number of vehicles becomes, the larger display wide degree becomes. Note that, an Interchange/Exit and a junction may be an end of a route. In this case, the smallest display wide degrees are set for display items of the Interchange/Exit and the junction so that the display items may be displayed even in the widest-area expressway simplified diagram.

Then a display wide degree stored for each point is read out as map data. It is determined whether the display wide degree is equal to or greater than a wide degree of the expressway simplified diagram displayed on the expressway simplified diagram screen. When the display wide degree is equal to or greater than the wide degree of the expressway simplified diagram, display items for a point corresponding to the display wide degree are determined.

For example, on the expressway simplified diagram screen of Fig. 34, "Komaki JCT," "Owari Ichinomiya PA," and "Ichinomiya JCT," which are the closest three points from the current position in the direction of travel, are displayed in the expressway simplified diagram with the largest wide degree as display items x21 to x23. In a diagram with the largest wide degree, display items for all Interchanges, junctions, Service Areas, and Parking Areas are displayed. However, as shown in Fig. 35, when the wide degree of the expressway simplified diagram goes down a notch, "Owari Ichinomiya PA" as display item x22 is removed from the expressway simplified diagram. Then "Nagaragawa PA" as display item x24 is newly displayed. When the smallest wide degree of the expressway simplified diagram goes up a notch, display items of Parking Areas are not selected.

Meanwhile, in accordance with the above exemplary method, when a display wide degree is set for each point on an expressway based on priorities, for example, when a high priority is set for a display item x22, "Owari Ichinomiya PA" is displayed even in the expressway simplified diagram with a small wide degree as shown in Fig. 36.

In addition, during guiding along a route, a high priority may be given to the Interchange at where the vehicle gets off an expressway along the route. Therefore, the Interchange may be displayed even in a small wide degree as a display item.

While various features have been described in conjunction with the examples outlined above, various alternatives, modifications, variations, and/or improvements of those features and/or examples may be possible. Accordingly, the examples, as set forth above, are intended to be illustrative. Various changes may be made without departing from the broad spirit and scope of the underlying principles.
Information distribution systems, methods, and/or programs register a point which meets predetermined registration conditions as a register point; select a predetermined register point as a predicted arrival display point; calculate a predicted arrival time at the predicted arrival display point; and display the predicted arrival on a map screen. Systems, methods, and/or programs obtain map data and traffic congestion information, including a plurality of congestion areas; set a priority for each congestion area; and display congestion detail information for a congestion area on the map screen based on the set priority. Systems, methods, and/or programs determine a priority for a register point; and display the register point on the map screen when the priority of the register point is greater than a predetermined value.

## Claims

1. An information distribution system, comprising:
a controller that:
registers a point which meets predetermined registration conditions as a register point;
selects a predetermined register point as a predicted arrival display point;
calculates a predicted arrival time at the predicted arrival display point; and
displays the predicted arrival time on a map screen.

2. The information distribution system of claim 1, wherein the controller:
searches for a route from a current point to the predicted arrival display point.

3. The information distribution system of claim 1, wherein the registration conditions are met when the point is used during traveling.

4. The information distribution system of claim 3, wherein the registration conditions are met by at least one of the following:
when a predetermined point is set as a destination;
when the vehicle stops at a predetermined point;
when an expressway or tollway is used;
when the vehicle passes through a main intersection; and
when the vehicle turns at an intersection.

5. The information distribution system of claim 1, wherein the predicted arrival time is a required time to travel from a current position to the predicted arrival display point.

6. The information distribution system of claim 1, wherein the controller:
stores a frequency count for the register point; and
selects, if the frequency count is greater than a threshold level, the register point as the predicted arrival display point.

7. The information distribution system of claim 1, wherein the controller:
obtains map data and traffic congestion information, including a plurality of congestion areas;
sets a priority for each congestion area; and
displays congestion detail information for a congestion area on the map screen based on the set priority.

8. The information distribution system of claim 7, wherein the controller sets the priority for each congestion area by evaluating at least one of: a site of congestion, a direction of congestion, a road type, a congestion degree, a congestion length, and a distance to the site of congestion.

9. The information distribution system of claim 1, wherein the controller:
determines a priority for the register point; and
displays the register point on the map screen when the priority of the register point is greater than a predetermined value.

10. An information distribution method, comprising:
registering a point which meets predetermined registration conditions as a register point;
selecting a predetermined register point as a predicted arrival display point;
calculating a predicted arrival time at the predicted arrival display point; and
displaying the predicted arrival time on a map screen.
